# EUROPEAN PATENT APPLICATION

(11) **EP 1 630 316 A1**
(43) Date of publication of application: **01.03.2006**
(21) Application number: 04705891.2
(22) Date of filing: 28.01.2004
(51) Int. Cl.: E04C 5/12

(54) **WEDGE FOR FIXING PC STEEL**

(30) Priority: 18.04.2003 JP 2003115083
(71) Applicant: Sumitomo (Sei) Steel Wire Corp., Itama-shi, Hyogo 664-0016 (JP)
(72) Inventor: KADOTANI, Tsutomu, Atsugi-shi, Kanagawa 243-0032 (JP); TAKAGAKI, Takashi, Sumitomo (sei) Steel Wire Corp., Itami-shi, Hyogo 664-0016 (JP); YAMADA, Masato, Sumitomo (sei) Steel Wire Corp., Itami-shi, Hyogo 664-0016 (JP); MATSUBARA, Y., Sumitomo (sei) Steel Wire Corp., Itami-shi, Hyogo 664-0016 (JP); NISHINO, Motonobu, Sumitomo (sei) Steel Wire Corp., Itami-shi, Hyogo 664-0016 (JP); INOO, Eiji, Itami-shi, Hyogo 664-0028 (JP)
(74) Representative: Cross, Rupert Edward Blount
(86) International application number: PCT/JP2004/000784
(87) International publication number: WO 2004/094745

(57) **Abstract**

There is provided a PC steel member fixing wedge, in which split pieces can be equally arranged around the PC steel member so as to prevent any deviation of a stress to be applied to the PC steel member.

The PC steel member fixing wedge is formed into a conical shape by combining a plurality of split pieces 11 with each other and grasps the PC steel member. A restraint ring 20 is provided for holding the split pieces 11 in the conical shape. The restraint ring 20 has a projection 21 to be fitted into a clearance defined between the split pieces. The projection 21 formed at the restraint ring 20 is configured in such a manner as to be fitted into the clearance defined between the split pieces 11, thus equally holding the arrangement of the split pieces 11 during the application of tension to the PC steel member and enabling the stress to be uniformly applied to the PC steel member.

## Description

### TECHNICAL FIELD

The present invention relates to a wedge for use in fixing an end of a PC steel member in a PC structure.

### BACKGROUND ART

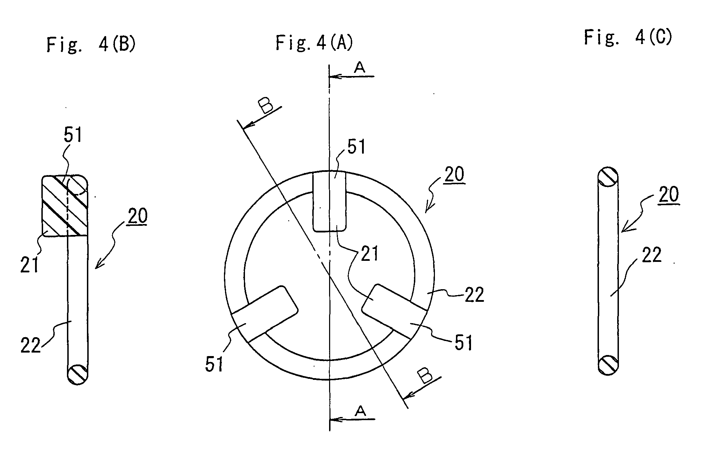

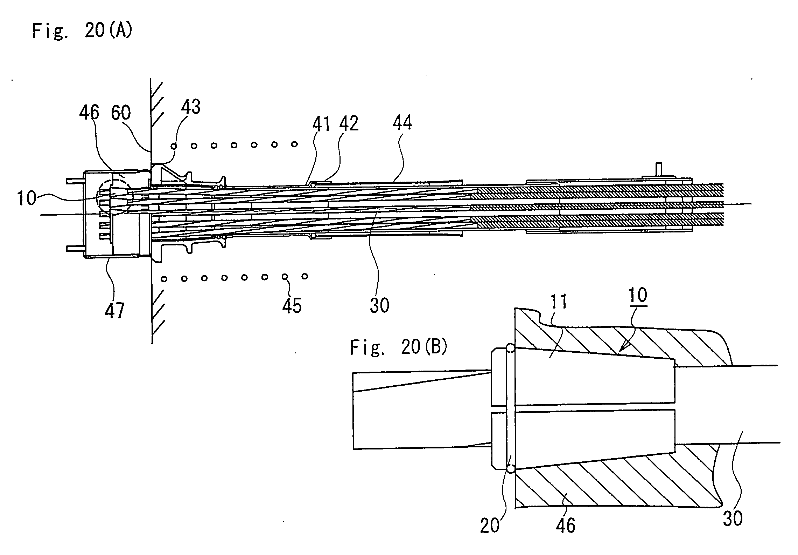

There has been known a structure using a wedge and an anchor disk as a structure for fixing a PC steel member such as a PC steel strand to a PC structure (see, for example, JP-A 8-68158 (Fig. 4)). In such a fixing structure, a plurality of PC steel strands 30 are covered with inner and outer trumpets 41 and 42, and further, a rib cast anchor 43 is disposed on a side of an end of a concrete structure 60, as shown in, for example, FIGS. 20(A) and 20(B).

An anchor disk 46 is mounted on the rib cast anchor 43. The anchor disk 46 is formed into a disk having a plurality of through holes for the PC steel strands 30. A part of the through hole is tapered in such a manner that a wedge 10, described later, is inserted thereinto.

Here, the wedge 10 is attached to the end of the PC steel strand 30. The wedge 10 is formed into a truncated cone by combining a plurality of split pieces 11 with each other. In the state where the split pieces 11 are combined with each other, a circular hole extending in an axial direction is formed at the center of the wedge 10. The PC steel strand 30 is grasped by the wedge 10 inside of the circular hole. The split pieces 11 are integrated with each other via a restraint ring 20 made of rubber or steel for the purpose of prevention of separation. The restraint ring 20 is, for example, an O-ring to be fitted around the wedge formed into the truncated cone by combining the split pieces 11 with each other.

A jack applies a predetermined tension to the PC steel strand grasped by the wedge. In the tense state, the PC steel strand is fixed to the PC structure by inserting the wedge into the through hole formed at the anchor disk.

### DISCLOSURE OF THE INVENTION

However, in the above-described wedge, the split pieces are non-uniformly arranged in a circumferential direction of the PC steel member, and therefore, there has arisen a problem that a stress may be non-uniformly applied to the PC steel member.

As described above, the wedge is constituted of the combination of the plurality of split pieces. Therefore, it is desirable that the split pieces should be arranged (1) uniformly in a longitudinal direction and (2) equally in the circumferential direction after the fixation by the wedge.

Since the wedge is fixed after the ends of the split pieces are uniformly arranged in the longitudinal direction by the applying force of a fixing plate of the jack during the application of the tension, the wedge can be approximately uniformly arranged in the longitudinal direction. To the contrary, it is difficult to equally arrange the split pieces in the circumferential direction after the fixation. This is because the wedge temporarily floats above the anchor disk during the application of the tension.

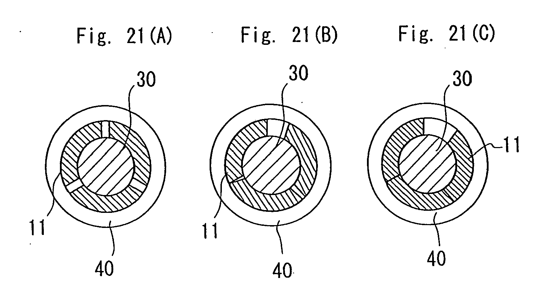

For example, even if the split pieces 11 are equally arranged before the tension of the PC steel strand 30, as shown in FIG. 21(A), the split pieces 11 may be moved inside of a coupling ring 40 fitted around the wedge during the application of tension, so as to be deviated in the circumferential direction, as shown in FIG. 21(B), so that the split pieces 11 may remain deviated after the fixation, as shown in FIG. 21(C). Even if the split pieces are equally arranged by using a tool such as a screwdriver before the tension, it is difficult to keep the equal arrangement as it is since the wedge temporarily floats during the application of tension.

Accordingly, a principal object of the present invention is to provide a PC steel member fixing wedge, in which split pieces can be equally arranged around the PC steel member so as to prevent any deviation of a stress to be applied to the PC steel member.

According to the present invention, the above-described object can be achieved by devising a mode of a restraint ring for holding the arrangement of split pieces in a wedge.

Specifically, a PC steel member fixing wedge according to the present invention, which is formed into a conical shape by combining a plurality of split pieces with each other and grasps a PC steel member, comprises a restraint ring for holding the split pieces in the conical shape. Herein, the restraint ring has a projection to be fitted into a clearance defined between the split pieces.

When the PC steel member is grasped by combining the split pieces with each other, the clearance is defined between the split pieces. During the application of tension, the split pieces can be moved by the clearance in a circumferential direction of the PC steel member, thereby inducing non-uniform arrangement. According to the present invention, the projection is formed at the restraint ring for holding the arrangement of the split pieces in the conical shape, and the projection is configured in such a manner as to be fitted into the clearance defined between the split pieces. The projection is adapted to equally hold the arrangement of the split pieces during the application of tension to the PC steel member, thereby enabling a stress to be uniformly applied to the PC steel member.

Normally, the wedge is designed to be formed into a truncated cone in the case where the split pieces are combined with each other. That is, each of the split pieces is formed in such a manner as to have a sectorial cross section orthogonal to the axial direction of the wedge.

Generally, in the case where the split pieces are combined with each other, the split pieces define a circular hole inside thereof, thereby forming a surface in contact with the PC steel member. Crest-shaped teeth are formed at the inner surfaces of the split pieces, so that the teeth receive a load to be exerted on the PC steel member in mesh with the PC steel member when the PC steel member is tensed or fixed. Although the number of split pieces is not particularly limited, it is typically about two or three. An annular groove is formed at the outer periphery of each of the split pieces on a large-diameter side. The restraint ring is held by the wedge by the use of the annular groove.

The restraint ring normally includes a ring portion and a projection projecting from the ring portion. The ring portion may be either closed or opened. Moreover, the ring portion may be located either at the peripheral surface of the wedge or at the end surface of the wedge on a large-diameter side.

Examples of the closed ring portion include a ring made of an elastic material such as rubber ring and a metallic ring. In the case of the rubber ring, since the rubber ring can elastically extend, the rubber ring is fitted to the annular groove formed at the outer periphery of the wedge in the state where the diameter of the rubber ring is increased. In the case where the rubber ring is fitted to the annular groove, the projection is formed in such a manner as to project toward the inner circumference of the ring portion.

If a closed rubber ring is used as the ring portion of the restraint ring, the projection may be formed in the same thickness as that of the ring portion. Additionally, a block portion may be molded integrally with the ring portion on the wedge large-diameter side, and the projection may be formed by allowing a part of the block portion to project toward the inner circumference of the ring portion. The formation of the block portion can increase an area in contact with the split piece, so that the arrangement of the split pieces can be equally held in the circumferential direction with more certainty. Here, the ring portion is fitted to the annular groove formed at the outer periphery of the wedge.

In contrast, in the case where a metallic ring is used as the closed ring portion and is fitted to the annular groove formed at the outer periphery of the wedge, the ring portion may be bent in a bellows manner so as to be molded into an annular shape. It is preferable that the ring portion should be molded with a belt-like metallic plate into the annular shape.

The metallic ring has a spring effect at the bellows portion. Therefore, the metallic ring can be inserted through a small-diameter portion of the wedge, so that the metallic ring can be fitted to the annular groove formed at the wedge outer periphery in the state where the diameter of the metallic ring is increased. If the metallic ring is formed in the bellows manner, the projection can be molded by greatly bending a part of the bent portion toward the inner circumference of the ring portion.

In addition, in the case of the metallic ring which cannot be increased in diameter, unlike the rubber ring, the metallic ring is provided with an engaging portion for holding the ring portion at the end surface of the wedge on the large-diameter side. Specific examples of the engaging portion include an elastic projecting piece which extends from the peripheral edge of the ring portion substantially in an axial direction and has elasticity in a radial direction of the ring portion. The ring portion is held at the end surface of the wedge on the large-diameter side by fitting such an elastic projecting piece to the annular groove formed at the wedge. Moreover, in the metallic ring, the projection to be fitted into the clearance defined between the split pieces also may be allowed to project slantwise through the center axis of the ring portion from the peripheral edge of the ring portion.

Additionally, in the case where the closed ring portion is configured in such a manner as to be held at the end surface of the wedge on the large-diameter side, a hole, into which a holding pin is inserted, may be formed at the ring portion, and then, the hole may serve as the engaging portion for allowing the ring portion to engage with the wedge. In this case, the engaging portion is held by the wedge via the holding pin by inserting the holding pin into the engaging portion and fixing the holding pin to the end surface of the wedge on the large-diameter side. Incidentally, the ring portion may be either a metallic ring or a plate-like rubber ring.

Moreover, the projection may be made of a protruding member formed at the ring portion in such a manner as to protrude toward the wedge small-diameter side. The protruding member is fitted into the clearance defined between the split pieces. The protruding member may be formed into a cylindrical or columnar shape. Furthermore, the protruding member needs to be deformed between the split pieces during the fixation of the wedge. In view of this, the protruding member should be preferably made of metal such as aluminum, which is easily deformed, in the case of the cylindrical shape; in contrast, the protruding member should be preferably made of an elastic material in the case of the columnar shape.

In the meantime, examples of the opened ring portion include a linear or belt-like elongated member molded into an annular shape. An elongated member having one end and the other end is molded into an annular shape and, further, the projection to be fitted into the clearance defined between the split pieces is molded continuously to the elongated member.

More specifically, the elongated member consists of a linear member such as a metallic wire; the elongated member is molded into the annular shape by bending the linear member in such a manner that one end and the other end overlap with each other; and further, the projection to be fitted into the clearance defined between the split pieces is molded by bending the linear member.

Otherwise, the elongated member may consist of a belt-like member, which is molded into the annular shape with an interval between one end and the other end; and further, the projection to be fitted into the clearance defined between the split pieces may be molded integrally with the belt-like member. At this time, it is preferable that a jig attaching portion for opening or closing one end and the other end should be formed at each of one end and the other end of the belt-like member.

Alternatively, in the case where the opened ring portion is molded by forming the elongated member of the belt-like member, it is preferable that two pieces of belt-like members should be attached to the annular grooves of the split pieces in arrangement of the split pieces in such a manner as not to overlap with each other at the ends thereof. In this manner, the ends are closed with the counterpart belt-like members, respectively, so that the restraint ring as a whole is closed in the circumferential direction in the annular shape, thereby enabling the split pieces to be equally arranged with more certainty.

In addition, in the opened ring portion, a belt-like member may be molded into an annular shape; a block member made of an elastic material may be formed in such a manner as to project toward the belt-like member on a wedge large-diameter side; and the projection to be fitted into the clearance defined between the split pieces may be formed of the block member. The formation of the block member can increase an area in contact with the split piece, so that the arrangement of the split pieces can be equally held in the circumferential direction with more certainty.

In either case, the restraint ring having the opened ring portion is constituted of the elongated member having one end and the other end, which are not continuous to each other, so that the diameter of the ring portion can be increased, thereby enabling the restraint ring to be fitted to the annular groove formed at the wedge.

The shape of the projection is not limited to a particular shape. Moreover, the number of projections is equal to that of split pieces. For example, if the number of split pieces is three, three clearances are defined between the split pieces, and therefore, the number of projections also becomes three. The projections are equally arranged in the circumferential direction of the restraint ring. The projection may be formed in such a manner as to project toward the inner circumference of the ring portion, to slantwise project toward the center from the outer periphery of the ring portion, or to project toward the axial direction from the ring portion.

The restraint ring should be preferably made of an elastic material such as rubber. In fixing the PC steel member, the split pieces are kept to be equally arranged in the circumferential direction, although the projection is deformed when the clearance defined between the split pieces is narrowed. In addition, the restraint ring may be made of metal or plastic.

Incidentally, the wedge according to the present invention can be applied to not only a naked PC steel strand but also a PC steel strand covered with a resin such as an epoxy resin.

As described above, with the wedge according to the present invention, the split pieces are arranged equally at the outer periphery of the PC steel member and uniformly in the longitudinal direction only by varying the specifications of the restraint ring. Thus, the PC steel member can be equally held, thereby enhancing the performance of a fixed portion. Furthermore, the tension is applied to the PC steel member in the same manner as when the wedge in the prior art is used; namely, the tension can be applied without any need of use of a special tool or device.

### BRIEF DESCRIPTION OF THE DRAWINGS

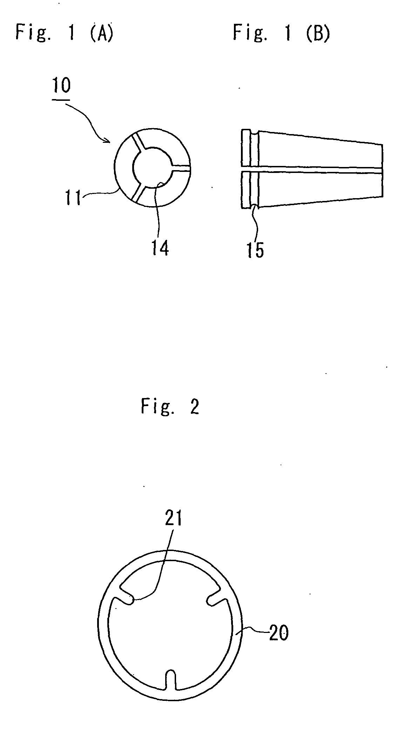

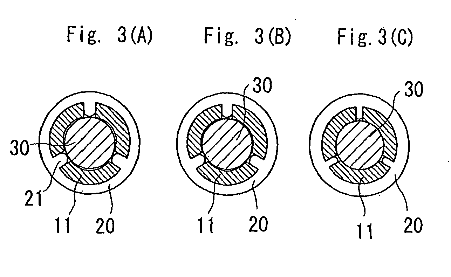

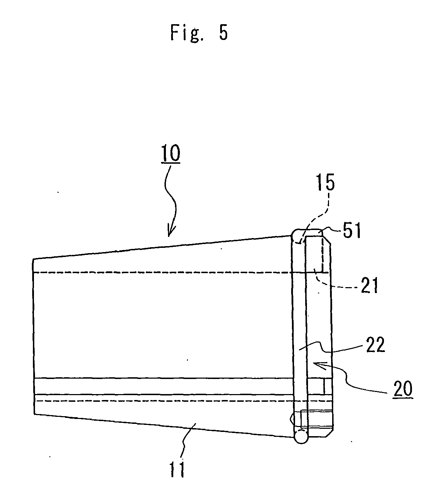

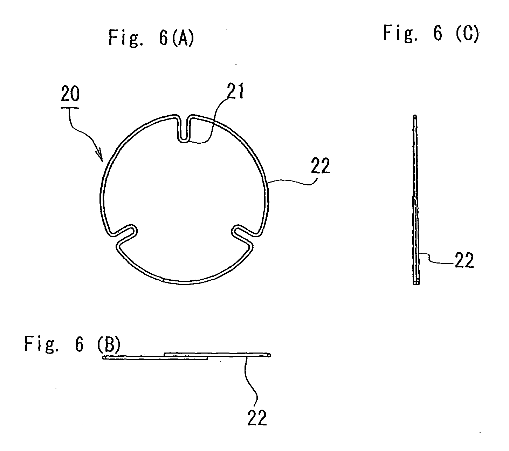

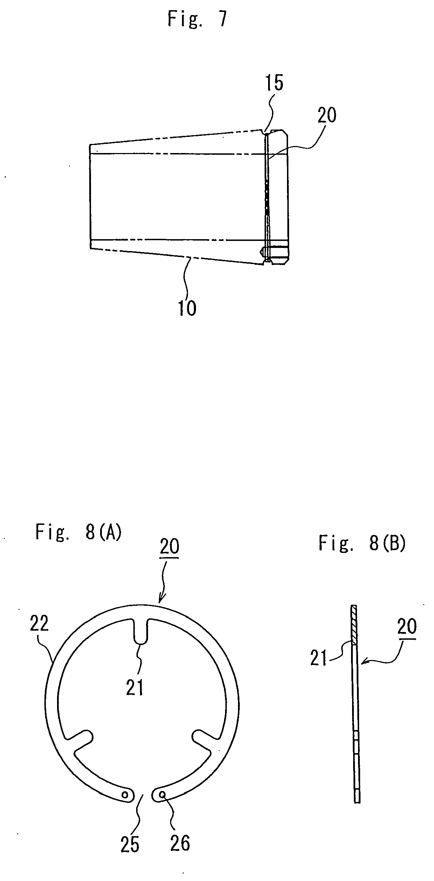

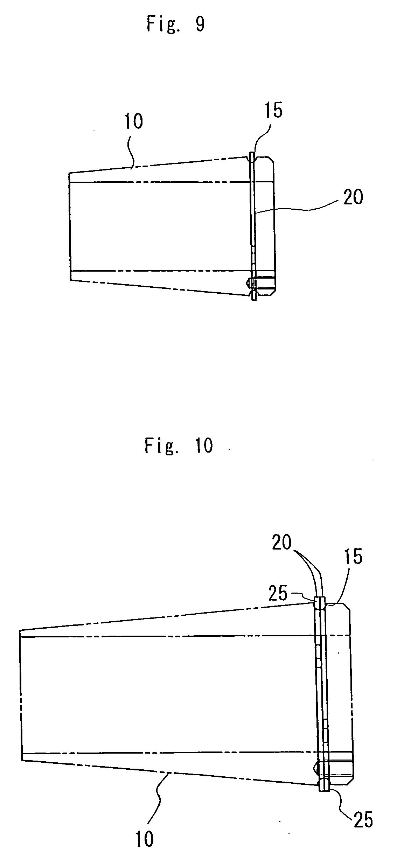

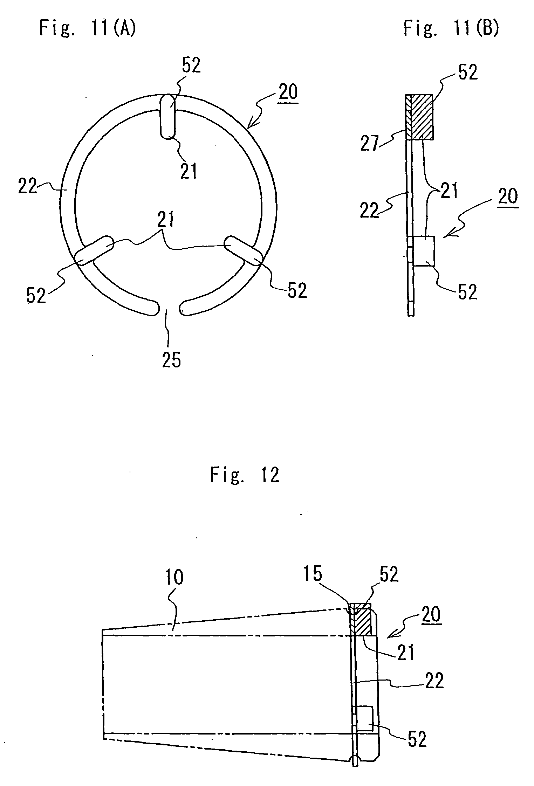

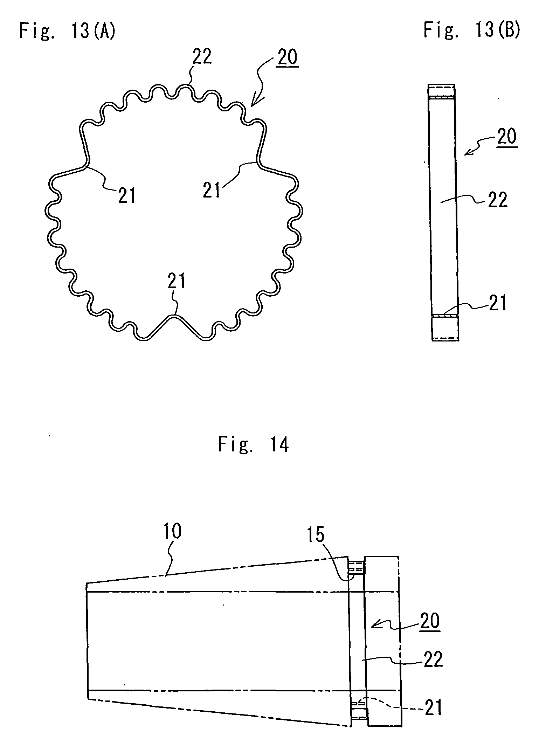

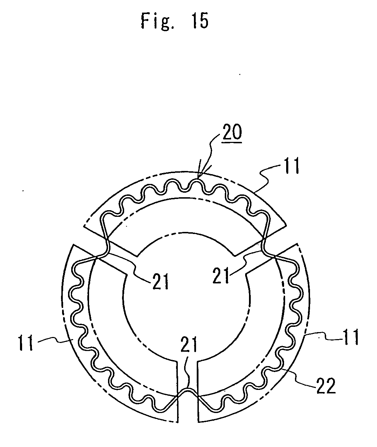

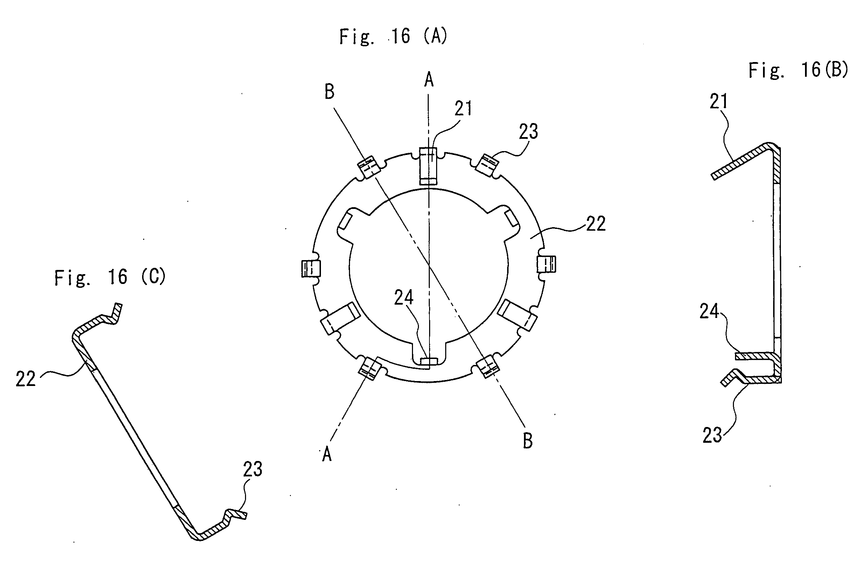

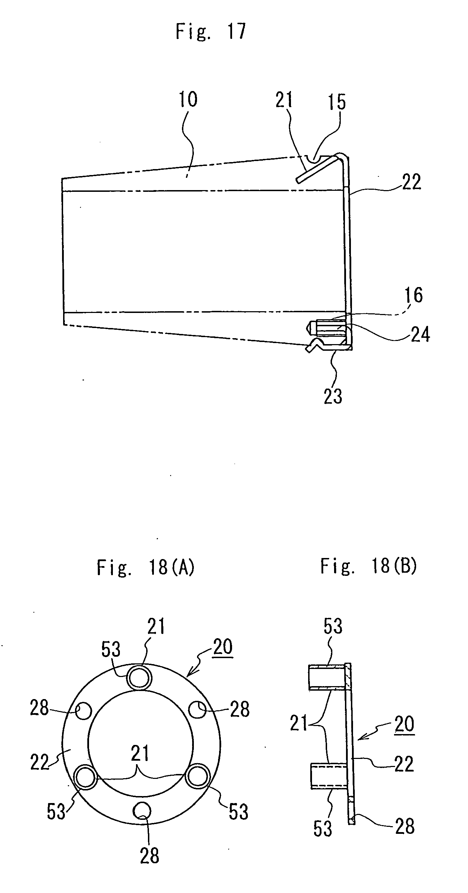

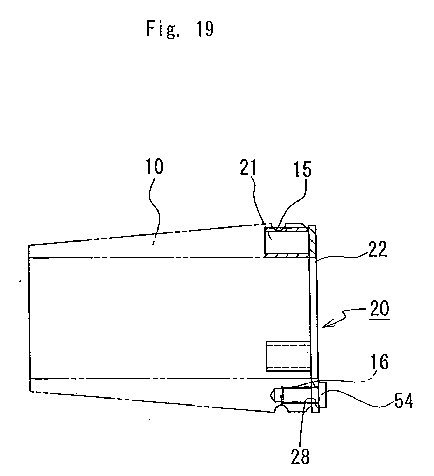

FIG. 1(A) is an end view showing a wedge according to the present invention, and FIG. 1(B) is a side view thereof. FIG. 2 is a plan view showing a restraint ring for use in a wedge in Embodiment 1 according to the present invention. FIGS. 3(A) to 3(C) are explanatory views showing states of a PC steel strand held by the wedge according to the present invention, wherein FIG. 3(A) shows a state before tension is applied to the PC steel strand, FIG. 3(B) shows a state when the tension is applied to the PC steel strand, and FIG. 3(C) shows a state after the PC steel strand is fixed. FIG. 4(A) is a plan view showing a restraint ring made of an elastic material in Embodiment 2, FIG. 4(B) is a cross-sectional view taken along line A-A of FIG. 4(A), and FIG. 4(C) is a cross-sectional view taken along line B-B of FIG. 4(A). FIG. 5 is an explanatory view showing a state where the restraint ring shown in FIGS. 4(A) to 4(C) is attached to the wedge. FIG. 6(A) is a plan view showing a clip-like restraint ring in Embodiment 3, FIG. 6(B) is a front view, and FIG. 6(C) is a right side view. FIG. 7 is an explanatory view showing a state where the restraint ring shown in FIGS. 6(A) to 6(C) is attached to the wedge. FIG. 8(A) is a plan view showing a plate-like restraint ring in Embodiment 4, and FIG. 8(B) is a cross-sectional view. FIG. 9 is an explanatory view showing a state where the restraint ring shown in FIGS. 8(A) and 8(B) is attached to the wedge. FIG. 10 is an explanatory view showing another state where the restraint ring shown in FIGS. 8(A) and 8(B) is attached to the wedge. FIG. 11(A) is a plan view showing a plate-like restraint ring in Embodiment 5, and FIG. 11(B) is a cross-sectional view. FIG. 12 is an explanatory view showing a state where the restraint ring shown in FIGS. 11(A) and 11(B) is attached to the wedge. FIG. 13(A) is a plan view showing a bellows-like restraint ring in Embodiment 6, and FIG. 13(B) is a cross-sectional view. FIG. 14 is an explanatory view showing a state where the restraint ring shown in FIGS. 13(A) and 13(B) is attached to the wedge. FIG. 15 is an explanatory view showing another state where the restraint ring shown in FIGS. 13(A) and 13(B) is attached to the wedge. FIG. 16(A) is a plan view showing a restraint ring which can be disposed from an end surface of a wedge in Embodiment 7, FIG. 16(B) is a cross-sectional view taken along line A-A of FIG. 16(A), and FIG. 16(C) is a cross-sectional view taken along line B-B of FIG. 16(A). FIG. 17 is an explanatory view showing a state where the restraint ring shown in FIGS. 16(A) to 16(C) is attached to the wedge. FIG. 18(A) is a plan view showing a plate-like restraint ring in Embodiment 8, and FIG. 18(B) is a cross-sectional view. FIG. 19 is an explanatory view showing a state where the restraint ring shown in FIGS. 18(A) and 18(B) is attached to the wedge. FIG. 20(A) is a cross-sectional view showing a fixing structure of a PC steel strand, and FIG. 20(B) is an enlarged view along a broken line of FIG. 20(A). FIGS. 21(A) to 21(C) are explanatory views showing states of the PC steel strand held by a wedge in the prior art, wherein FIG. 21(A) shows a state before tension is applied to the PC steel strand, FIG. 21(B) shows a state when the tension is applied to the PC steel strand, and FIG. 21(C) shows a state after the PC steel strand is fixed.

### BEST MODE FOR CARRYING OUT THE INVENTION

Hereinafter, description will be given of embodiments according to the present invention.

### (Embodiment 1)

A wedge 10 according to the present invention is constituted of three split pieces 11, as shown in FIGS. 1(A) and 1(B). Each of the split pieces 11 has a substantially sectorial cross section, and is formed into a tapered shape having a large diameter at one end thereof and a small diameter at the other end thereof. The three split pieces 11 are formed into a substantially truncated cone by combining the three split pieces 11 with each other.

The split piece 11 has the sectorial cross section having an arcuate surface. The inner surface of the split piece 11 is brought into contact with a PC steel strand. A circular hole for use in grasping the PC steel strand is formed by combining the split pieces 11 with each other. Here, crest-shaped teeth 14 are formed at the inner surface of the split piece 11 in such a manner as to more firmly grasp the PC steel strand.

In the meantime, an annular groove 15 is formed at the outer periphery of the wedge 10 on a large-diameter side. To the annular groove 15 is fitted a restraint ring, described later.

FIG. 2 is a plan view showing a restraint ring 20. The restraint ring 20 is an O-ring, which has three projections 21 on the inner circumference thereof and is made of rubber. The restraint ring 20 is formed into a plate-like shape in the same thickness as a whole inclusive of the projections 21. Each of the projections 21 is inserted between the split pieces 11 (see FIGS. 1(A) and 1(B)) when the split pieces 11 are combined with each other. The restraint ring 20 thus configured as described above is fitted to the annular groove 15 formed at the wedge (see FIGS. 1(A) and 1(B)) and, simultaneously, the projections 21 are inserted between the split pieces 11.

As shown in FIG. 3(A), the split pieces are equally arranged with the projections 21 formed at the restraint ring 20 before tension is applied to a PC steel strand 30. As shown in FIG. 3(B), the split pieces 11 can be kept to be equally arranged during the application of the tension. The split pieces are kept to be equally arranged (see FIG. 3(C)), although the projections are compressed to be deformed after fixation. As a consequence, a uniform stress can be applied to the PC steel strand.

The above-described wedge is also common to the conventional wedge from the viewpoint of the use for the fixing structure shown in FIG. 20(A). In such a fixing structure, the plurality of PC steel strands 30 are covered with inner and outer trumpets 41 and 42 and, further, a rib cast anchor 43 is disposed on the side of an end surface of a concrete structure 60.

At the ends of the inner and outer trumpets 41 and 42 is disposed a recess tube 44. Around the inner and outer trumpets 41 and 42 and the rib cast anchor 43 is disposed a spiral stripe 45. Furthermore, the anchor disk 46 is mounted on the rib cast anchor 43.

The anchor disk 46 is formed into a disk shape having the plurality of through holes for the PC steel strands 30. A part of the through hole is tapered in such a manner that the above-described wedge 10 is inserted thereinto. The ends of the anchor disk and the PC steel strand are covered with a grout cap 47.

The PC steel strand is tensed and fixed in accordance with, for example, the following procedures:
1. the PC steel strand is housed inside the inner trumpet;
2. the anchor disks are set at both ends of the PC steel strand;
3. the wedge is driven into the tapered hole of the anchor disk;
4. a tension jack is set at the end of the PC steel strand;
5. tension is applied to the PC steel strand up to a predetermined load by the tension jack;
6. the wedge is insertingly press-fitted into the tapered hole of the anchor disk in the tense state; and
7. the PC steel strand is fixed with the wedge by releasing the tension by the jack.

It is to be understood that the fixing structure shown in FIG. 20(A) is one example of fixing structures using the wedge. In addition, there are listed (1) a structure using a single-layered tube sheath without using either of inner and outer trumpet sheaths; (2) a structure using a plate disposed at a concrete end surface without using any rib cast anchor; and (3) a structure, in which not a plurality of PC steel strands but only one PC steel strand is disposed.

### (Embodiment 2)

Subsequently, a restraint ring constituted of the same rubber ring as in Embodiment 1 will be described below with reference to FIGS. 4(A) to 4(C). FIG. 4(A) is a plan view showing a restraint ring, FIG. 4(B) is a cross-sectional view taken along line A-A of FIG. 4(A), and FIG. 4(C) is a cross-sectional view taken along line B-B of FIG. 4(A).

A restraint ring 20 includes a ring portion 22 and block portions 51 molded integrally with the ring portion 22 on a wedge large-diameter side. A part of the block portion 51 is allowed to project toward the inner circumference of the ring portion 22, thereby forming a projection 21. Three block portions 51 are formed at the ring portion 22 at equal intervals. In this embodiment, the three block portions 51 are formed at an interval of 120°. The inner circumferential portion of the block portion 51 beyond the ring portion 22 serves as the projection 21.

FIG. 5 shows a state where the restraint ring 20 is attached to a wedge 10. The restraint ring 20 is disposed by fitting the ring portion 22 to an annular groove 15 formed at the outer periphery of the wedge on a large-diameter side. The projections 21 are fitted between split pieces when the ring portion 22 is fitted to the annular groove 15.

In the same manner as in Embodiment 1 shown in FIG. 2, the restraint ring in this embodiment also can prevent the split pieces from being non-uniformly arranged in a circumferential direction. Furthermore, the formation of the block portion 51 can increase an area in contact with the split piece, so that the arrangement of the split pieces can be equally held in the circumferential direction with more certainty.

### (Embodiment 3)

Next, a clip-like restraint ring constituted of a metallic wire will be described below with reference to FIGS. 6(A) to 6(C). FIG. 6(A) is a plan view showing a clip-like restraint ring, FIG. 6(B) is a front view, and FIG. 6(C) is a right side view.

This restraint ring is formed into an annular shape by bending a piece of metallic wire. That is, a ring portion 22 is formed by bending the metallic wire into a circular shape in such a manner that one end and the other end of the metallic wire overlap with each other. Thereafter, a projection 21 is formed toward the center of the ring portion 22 by bending the ring portion 22 on the way into a U shape. In this embodiment, three projections 21 are formed at an interval of 120°.

FIG. 7 shows a state where the restraint ring 20 thus configured as described above is attached to a wedge 10. The restraint ring is disposed by fitting the ring portion 22 to an annular groove 15 formed at the outer periphery of the wedge on a large-diameter side. Since one end and the other end of the metallic wire constituting the restraint ring 20 merely overlap with each other without any continuation, the restraint ring 20 can be disposed around the wedge 10 by enlarging the ring portion 22 toward the outer periphery. At this time, the ring portion 22 is fitted to the annular groove 15 formed at the wedge and, further, the projections 21 are interposed between split pieces.

In the same manner as in Embodiment 1 shown in FIG. 2, the restraint ring in this embodiment also can prevent the split pieces from being non-uniformly arranged in a circumferential direction.

### (Embodiment 4)

Next, a restraint ring constituted of a metallic plate will be described below with reference to FIGS. 8(A) and 8(B). FIG. 8(A) is a plan view showing the restraint ring, and FIG. 8(B) is a cross-sectional view.

In this restraint ring, a belt-like ring portion 22 is molded integrally with projections 21 projecting inward of the ring portion 22 by punching a metallic plate. A clearance is defined between one end and the other end of the belt-like ring portion 22 and, therefore, an opening 25 is formed at a part of the ring portion 22 in a circumferential direction.

A circular hole 26 is formed at each of one end and the other end of the belt-like ring portion 22. The circular hole 26 is used for increasing the width of the opening 25 with an appropriate jig fitted into the circular hole 26. The projection 21 is constituted of a tongue projecting toward the center from the ring portion 22. In this embodiment, three projections 22 are formed at an interval of 120°. Here, the circular hole 26 may not be formed as long as the width of the opening 25 can be increased even if no circular hole 26 is formed.

FIG. 9 shows a state where the restraint ring thus configured as described above is attached to a wedge. The restraint ring 20 is fitted to an annular groove 15 formed at the outer periphery of the wedge 10 on a large-diameter side. Since the ring portion 22 constituting the restraint ring has the opening 25, the restraint ring 20 can be disposed around the wedge 10 by enlarging the ring portion 22 toward the outer periphery. At this time, the ring portion 20 is fitted to the annular groove 15 formed at the wedge and, further, the projections 21 are interposed between split pieces.

In the same manner as in Embodiment 1 shown in FIG. 2, the restraint ring in this embodiment also can prevent the split pieces from being non-uniformly arranged in a circumferential direction.

Incidentally, two restraint rings may be fitted to the annular groove 15 formed at the split pieces 11 in arrangement in such a manner that ends, that is, the openings 25 never overlap with each other in this embodiment, as shown in FIG. 10. As described above, when the two restraint rings are arranged, the end of each of the two restraint rings is closed by the other belt-like restraint ring. As a consequence, the restraint rings are formed into the annular shape in which the restraint rings as a whole are closed in the circumferential direction. Thus, the split pieces can be equally arranged with more certainty.

### (Embodiment 5)

Subsequently, with reference to FIGS. 11(A) and 11(B), description will be given of a restraint ring formed by molding a belt-like member having one end and the other end into an annular shape and allowing a block member made of an elastic material to project toward a wedge large-diameter side of the belt-like member. FIG. 11(A) is a plan view showing the restraint ring, and FIG. 11(B) is a cross-sectional view.

In this restraint ring, a belt-like ring portion 22 is molded integrally with protruding portions 27 protruding inward of the ring portion 22 by punching a metallic plate. Thereafter, block members 52 made of an elastic material are fixed onto the protruding portions 27 and the ring portion 22 continuous to the protruding portions 27.

The block member 52 is configured in such a manner as to project toward a wedge large-diameter side of the ring portion 22 when the ring portion 22 is disposed in a wedge. The block member 52 and the protruding portion 27 formed at the ring portion 22 constitute a projection 21 to be fitted into a clearance defined between split pieces. In this embodiment, three projections 21 are formed at an interval of 120°. Also in this embodiment, an opening 25 is formed at a part of the ring portion 22 in a circumferential direction by defining a clearance between one end and the other end of the belt-like ring portion 22.

FIG. 12 shows a state where the restraint ring thus configured as described above is attached to a wedge. This restraint ring 20 is disposed by fitting the ring portion 22 to an annular groove 15 formed at the outer periphery of a wedge 10 on a large-diameter side. Since the ring portion 22 constituting the restraint ring has the opening 25, the restraint ring 20 can be disposed around the wedge 10 by enlarging the ring portion 22 toward the outer periphery. When the ring portion 20 is fitted to the annular groove 15 formed at the wedge, the projections 21 are interposed between the split pieces.

In the same manner as in Embodiment 1 shown in FIG. 2, the restraint ring in this embodiment also can prevent the split pieces from being non-uniformly arranged in a circumferential direction. Furthermore, the formation of the block member can increase an area in contact with the split piece, so that the arrangement of the split pieces can be equally held in the circumferential direction with more certainty.

### (Embodiment 6)

Next, description will be given of a restraint ring, which is bent at a ring portion in a bellows manner, with reference to FIGS. 13(A) and 13(B). FIG. 13(A) is a plan view showing the restraint ring, and FIG. 13(B) is a cross-sectional view.

This restraint ring is molded into an annular shape by bending a metallic belt-like member in a bellows manner. A closed ring portion is molded into the annular shape in the above-described manner. Thereafter, a projection 21 is molded by bending a part of the bent portion of the ring portion largely inward.

FIGS. 14 and 15 show a state where the restraint ring thus configured as described above is attached to a wedge. This restraint ring 20 is disposed by inserting a ring portion 22 from a wedge 10 on a small-diameter side and fitting the ring portion 22 to an annular groove 15 formed at the outer periphery of the wedge 10 on a large-diameter side. Since the ring portion 22 has a spring effect at the bellows portion, the restraint ring 20 can be fitted to the annular groove 15 formed at the outer periphery of the wedge in a state where the diameter of the ring portion 22 is increased. When the ring portion 20 is fitted to the annular groove 15 formed at the wedge, the projections 21 are interposed between the split pieces.

In the same manner as in Embodiment 1 shown in FIG. 2, the restraint ring in this embodiment also can prevent the split pieces from being non-uniformly arranged in a circumferential direction. Furthermore, since the projection 21 is formed of the belt-like member having a predetermined width, an area of the projection 21 in contact with the split piece can be increased more than the contact area of the projection formed in the same thickness as that of the plate-like ring member in Embodiment 1. As a consequence, the arrangement of the split pieces can be equally held in the circumferential direction with more certainty.

### (Embodiment 7)

Subsequently, description will be given of a restraint ring, which can be disposed at an end of a wedge, with reference to FIGS. 16(A) to 16(C). FIG. 16(A) is a plan view showing the restraint ring, FIG. 16(B) is a cross-sectional view taken along line A-A of FIG. 16(A), and FIG. 16(C) is a cross-sectional view taken along line B-B of FIG. 16(A).

This restraint ring 20 includes a ring portion 22, engaging portions 23 for holding the ring portion 22 at an end surface of a wedge, projections 21 to be interposed between split pieces of the wedge, and positioning portions 24 to be fitted to the end surface of the wedge. Each of these constituent elements is made of a metallic plate.
The engaging portion 23, the projection 21 and the positioning portion 24 are formed by bending a projecting piece continuous from the ring portion 22.

The engaging portion 23 is a projecting piece which is allowed to project from the peripheral edge of the ring portion 22 toward a substantially axial direction and is bent into a V shape at the tip end thereof. The ring portion 22 is held at the end surface of the wedge on a large-diameter side by fitting the portion bent into the V shape to an annular groove 15 formed at the outer periphery of the wedge. In this embodiment, six engaging portions 23 are formed at an interval of 60°.

The projection 21 is a linear projecting piece which slantwise projects from the peripheral edge of the ring portion 22 toward the center of the ring portion 22. The projecting piece is interposed between split pieces constituting a wedge 10. In this embodiment, three projections 21 are formed at an interval of 120°.

The positioning portion 24 is a linear projecting piece which extends, in a substantially axial direction, from the back of a substantially rectangular cutout formed at the inner circumferential edge of the ring portion 22. The positioning portion 24 is inserted into a positioning hole 16 formed at the end surface of the wedge on the large-diameter side, so as to hold the restraint ring 20 at an appropriate position with respect to the wedge 10. In this embodiment, three positioning portions 24 are formed at an interval of 120°, respectively, at a position corresponding an intermediate position between the projections 21.

FIG. 17 shows a state where the restraint ring thus configured as described above is attached to a wedge. The restraint ring is disposed at the end surface of the wedge on the large-diameter side. That is, the positioning portion 24 is inserted into the positioning hole 16 formed at the end surface of the wedge and, further, the engaging portion 23 is fitted to the annular groove 15 formed at the outer periphery of the wedge. At this time, the projections 21 are interposed between the split pieces.

In the same manner as in Embodiment 1 shown in FIG. 2, the restraint ring in this embodiment also can prevent the split pieces from being non-uniformly arranged in a circumferential direction.

### (Embodiment 8)

Next, description will be given of a restraint ring, in which a plate-like ring portion is made of an elastic material and a metallic, cylindrical protruding member is disposed in the ring portion, with reference to FIGS. 18(A) and 18(B). FIG. 18(A) is a plan view showing the restraint ring, and FIG. 18(B) is a cross-sectional view.

This restraint ring includes a doughnut plate-like ring portion 22 made of an elastic material, and protruding members 53 formed on the ring portion 22 in such a manner as to protrude toward a wedge small-diameter side.

Moreover, a hole 28 for allowing a holding pin 54 to be inserted thereinto is formed in the ring portion 22.
The hole 28 serves as an engaging portion to be held at an end surface of a wedge on a large-diameter side via the holding pin 54. The protruding member 53 is formed into a cylindrical shape and, thereafter, the cylindrical member is fixed to the ring portion 22. The protruding member 53 constitutes a projection 21 to be fitted into a clearance defined between split pieces. The projection needs to be deformed under pressure when the clearance defined between the split pieces becomes narrow at the time of the fixation of the wedge. In view of this, the protruding member 53 is made of a metallic material such as aluminum, which is likely to be deformed, into the cylindrical shape. In this embodiment, three projections 21 are formed at an interval of 120°. The hole 28 is formed between the projections 21.

After the holding pin 54 is inserted through the hole 28 formed in the ring portion 22, it is inserted into a positioning hole 16 formed at the end surface of the wedge on the large-diameter side. Thus, a restraining ring 20 is held at an appropriate position with respect to a wedge 10 by fixing the holding pin 54 to the wedge.

FIG. 19 shows a state where the restraint ring thus configured as described above is attached to the wedge.
The restraint ring is disposed at the end surface of the wedge on the large-diameter side. That is, the hole 28 formed in the ring portion 22 and the positioning hole 16 formed at the end surface of the wedge overlap with each other and, thereafter, the holding pin 54 is fixingly inserted into the hole 28 and the positioning hole 16. Consequently, the restraint ring is disposed in the wedge. At this time, the protruding members 53 serving as the projections 21 are interposed between the split pieces.

In the same manner as in Embodiment 1 shown in FIG. 2, the restraint ring in this embodiment also can prevent the split pieces from being non-uniformly arranged in a circumferential direction. Furthermore, the formation of the cylindrical protruding member 53 can increase an area in contact with the split piece, so that the arrangement of the split pieces can be equally held in the circumferential direction with more certainty.

### INDUSTRIAL APPLICABILITY

The wedge according to the present invention is suitable for a fixing wedge, in which the split pieces of the wedge can be equally arranged in the circumferential direction of the PC steel member and, also, the split pieces can be uniformly arranged in the longitudinal direction.

## Claims

1. A PC steel member fixing wedge which is formed into a conical shape by combining a plurality of split pieces with each other and grasps a PC steel member, the PC steel member fixing wedge comprising:
a restraint ring for holding said split pieces in the conical shape, wherein
the restraint ring has a projection to be fitted into a clearance defined between the split pieces.

2. The PC steel member fixing wedge according to claim 1, wherein said restraint ring is made of an elastic material.

3. The PC steel member fixing wedge according to claim 2, wherein said restraint ring includes a ring portion and a block portion molded integrally with the ring portion on a wedge large-diameter side, and said projection is formed by allowing a part of the block portion to project toward the inner circumference of the ring portion.

4. The PC steel member fixing wedge according to claim 1, wherein said restraint ring is obtained by molding an elongated member having one end and the other end into an annular shape and, further, the projection to be fitted into the clearance defined between the split pieces is molded continuously to said elongated member.

5. The PC steel member fixing wedge according to claim 4, wherein said elongated member consists of a linear member, the elongated member is molded into the annular shape by bending the linear member in such a manner that one end and the other end overlap with each other, and the projection to be fitted into the clearance defined between the split pieces is also molded by bending said linear member.

6. The PC steel member fixing wedge according to claim 4, wherein said elongated member consists of a belt-like member, which is molded into the annular shape with an interval between one end and the other end, and the projection to be fitted into the clearance defined between the split pieces is also molded integrally with said belt-like member.

7. The PC steel member fixing wedge according to claim 6, wherein a jig attaching portion for opening or closing one end and the other end is formed at each of one end and the other end of said belt-like member.

8. The PC steel member fixing wedge according to claim 6 or 7, wherein two pieces of said belt-like members are attached to said split pieces in arrangement in such a manner as not to overlap with each other at the ends thereof.

9. The PC steel member fixing wedge according to claim 1, wherein said restraint ring is obtained by molding a belt-like member having one end and the other end into an annular shape, and the projection to be fitted into the clearance defined between the split pieces is formed by allowing a block member made of an elastic material to project toward the belt-like member on a wedge large-diameter side.

10. The PC steel member fixing wedge according to claim 1, wherein said restraint ring has a ring portion, which is bent in a bellows manner so as to be molded into an annular shape, and the projection to be fitted into the clearance defined between the split pieces is molded by greatly bending a part of said bent portion toward the inner circumference of the ring portion.

11. The PC steel member fixing wedge according to claim 1, wherein said restraint ring includes a ring portion and an engaging portion for holding the ring portion at an end surface of the wedge on a wedge large-diameter side, and said projection is constituted integrally with the ring portion.

12. The PC steel member fixing wedge according to claim 1, wherein said restraint ring includes a ring portion and an engaging portion for holding the ring portion at an end surface of the wedge on a wedge large-diameter side via a holding pin, and said projection is constituted of a protruding member which is formed at the ring portion in such a manner as to protrude toward a wedge small-diameter side.
